# EUROPEAN PATENT APPLICATION

(11) **EP 3 064 480 A1**
(43) Date of publication of application: **07.09.2016**
(21) Application number: 16158237.4
(22) Date of filing: 02.03.2016
(51) Int. Cl.: C04B 28/00

(54) **ANTI-RADIATION CONCRETE COMPOSITION AND METHOD OF ITS PRODUCTION**

(30) Priority: 03.03.2015 MY PI2015700660
(71) Applicant: Universiti Malaysia Perlis, 02600 Arau (MY); King Abdulaziz City for Science and Technology, 11442 Riyadh (SA)
(72) Inventor: KAMARUDIN, Hussin, 01000 Perlis (MY); AL BAKRI, Abdullah Mohd Mustafa, 01000 Perlis (MY); KATHAN, Mohammed S., 01000 Perlis (MY); AZEEZ, Ali Basheer, 01000 Perlis (MY); RAHMAT, Azmi, 01000 Perlis (MY); ZULKEPLI, Nik Noriman, 01000 Perlis (MY); BINHUSSAIN, Mohammed, 11442 Riyadh (SA)
(74) Representative: Gulde & Partner

(57) **Abstract**

An anti-radiation concrete comprises a geopolymer, a mixture of at least two alkaline activators, fine aggregate, and coarse aggregate from high density metal-containing rocks.

## Description

### FIELD OF INVENTION

This invention relates to a geopolymeric cementitious material. More particularly, the present invention relates to a heavy geopolymer-based concrete for shielding radiation which contains no ordinary Portland cement to minimize emission of carbon dioxide.

### BACKGROUND OF INVENTION

To shield a radiation source from which ionizing radiation is emitted, concrete is often used in facilities containing radioactive sources or radiation generating equipment. The selection of materials and the configuration of materials for shielding which result in different shielding properties are dependent on the type, intensity, and output of the radiation source. Ordinary Portland cement and highly dense aggregates are usually used to enhance the shielding properties of the concrete. However, such high concentration of ordinary Portland cement and dense aggregates present in the concrete contribute to a high energy demand involving huge carbon dioxide emissions. It is estimated that 0.7 tons to 1.1 tons of carbon dioxide are emitted for every ton of concrete produced.

Research effort has been made to develop a supplementary cementitious material for partial replacement of the ordinary Portland cement to encounter the aforementioned drawbacks. Geopolymer such as fly ash, blast furnace slag, fumed silica, metakaolin, pozzolans, and biomass ash has been used as the supplementary cementitious material. Geopolymer is used because it is inert, strong, and environment friendly. There are few patented technologies relating to geopolymer-based concretes. However, there is a wide variation in the compositions as well as the method of producing the same.

US 8,257,486 discloses a building construction material made from ash, alkaline chemical activators, additive materials, and water in which ash constitutes the largest amount of the construction material. The ash is fly ash or bottom ash whereas the additive materials can be metallurgical slag, building material debris, resins and plastics, clay, mining wastes, or a mixture thereof. The building material is formed through easy and simple conditions by simply raw mixing, and is environmental friendly and cheap.

US 8,323,398 discloses a construction material containing sand, fine aggregates, coarse aggregates, water, and a binder. The binder contains class F fly ash, blast furnace slag, alkaline activators, and a booster comprising at least one strong base. The patented invention also provides a method of producing the construction material. The binder is mainly made from residues, and is eco-friendly for involving limited indirect carbon dioxide emission and low energy consumption.

CN 103 224 369 discloses an anti-radiation concrete produced from water, ordinary Portland cement, silicon ash, fly ash, high titanium heavy slag coarse aggregate, high titanium heavy slag sand, lead powder, methyl cellulose ether, and fibers. The concrete has good mechanical properties, durability, and shielding performance which can be used in the fields of nuclear power, medical, scientific, or others.

Some of the cementitious construction materials disclosed in the prior art contain no ordinary Portland cement with low energy consumption and low carbon dioxide emission. However, the anti-radiation capability of these construction materials is low. On the other hand, other construction materials with anti-radiation properties disclosed in the prior art still rely on ordinary Portland cement as a base material.

Hence, there is a need to develop a concrete composition with high radiation shielding capability and containing no ordinary Portland cement so as to minimize carbon dioxide emission and production costs.

This invention provides a solution to these problems.

### SUMMARY OF INVENTION

One of the objects of the invention is to provide a heavy geopolymer-based concrete for shielding radiation.

Another object of the invention is to provide a method of producing the heavy geopolymer-based concrete for shielding radiation.

Still another object of the invention is to develop a geopolymer-based concrete for shielding radiation without the use of ordinary Portland cement.

Yet another object of the invention is to develop a method of producing an anti-radiation concrete through simple mixing and curing steps which has minimum carbon dioxide emissions and energy requirement. The concrete shall be cured at a relatively low temperature due to the absence of ordinary Portland cement.

At least one of the preceding aspects is met, in whole or in part, by the present invention, in which the anti-radiation concrete according to the present invention comprises a geopolymer; a mixture of at least two alkaline activators; a fine aggregate; and a coarse aggregate from high density metal-containing rocks.

In a preferred embodiment of the invention, the geopolymer is selected from the group consisting of fly ash, kaolin, pozzolonite, silica sand, and a mixture thereof.

In another preferred embodiment of the invention, the alkaline activators are salts of an alkali metal. More preferably, the alkaline activators are selected from the group consisting of hydroxides, silicates, sulphates, or carbonates of an alkali metal or an earth alkali metal. The alkali metal is preferably selected from the group comprising lithium (Li), sodium (Na) and potassium (K), and is most preferably Na. The earth alkali metal is preferably selected from the group comprising magnesium (Mg), calcium (Ca) and barium (Ba). The alkaline activators may be used in form of a solution of the salts, preferably in form of an aqueous solution.

Still in another preferred embodiment of the invention, the fine aggregate is selected from the group consisting of sand, waste iron, slag, and a mixture thereof.

According to another embodiment of the invention, the coarse aggregate is selected from high density natural ore rocks. Particularly suitable ore rocks comprise hematite, dolomite, cassiterite, and combinations thereof.

Yet in another preferred embodiment of the invention, the weight ratio of the geopolymer to the total sum of alkaline activator solution(s), i.e. the total sum of activators and the solvent, is in the range of from 2:1 to 3:1. Here, the alkaline activator solutions used in the cement mixture preferably have a concentration in the range of from 5 M (mol/L) to 30 M with respect to each alkaline activator, even more preferred in the range of from 10 M to 15 M. If a combined or mixed solution is used containing both of the at least two alkaline activators, the individual concentration of each activator in the solution is half of the above ranges, where the concentration of the total sum of activators is preferably in the range of from 5 M to 30 M, more preferably 10 M to 15 M. With these ratios, no further solvent, particularly no further water, needs to be added to the concrete mixture.

A further aspect of the invention is directed a method of producing the anti-radiation concrete according to the invention comprising the steps of mixing of at least two alkaline activators, a geopolymer, a fine aggregate, and a coarse aggregate from high density metal-containing rocks; curing the mixture in a mold at a temperature in the range of from 50 to 95°C, preferably 70°C, for a duration in the range of from 10 hours to 48 hours, preferably for 24 hours; aging the cured mixture; and de-molding the aged mixture.

### DETAILED DESCRIPTION OF THE INVENTION

This invention relates to a geopolymeric cementitious material. More particularly, the present invention relates to a heavy geopolymer-based concrete for shielding radiation which contains no ordinary Portland cement thus minimizing the consumption of energy and emission of carbon dioxide.

Hereinafter, the invention shall be described according to the preferred embodiments of the present invention and by referring to the accompanying description. However, it is to be understood that limiting the description to the preferred embodiments of the invention is merely to facilitate conception of the present invention and it is envisioned that those skilled in the art may devise various modifications without departing from the scope as defined in the claims. The invention discloses an anti-radiation concrete comprising a geopolymer; a mixture of at least two aqueous alkaline activators; fine aggregate; and coarse aggregate from high density metal- containing rocks.

In the preferred embodiment of the invention, the geopolymer-based concrete is formed from geopolymer as a base material and contains no ordinary Portland cement. The geopolymer can be selected from the group, but is not limited to, consisting of kaolin, fly ash, pozzolonite, silica sand, or a mixture thereof. Preferably, ASTM Class F fly ash is employed. Class F fly ash is typically obtained from the burning of harder, older anthracite and bituminous coal. Class F fly ash is a pozzolan in which the sum of silicon dioxide (SiO₂), aluminium oxide (Al₂O₃), and iron oxide (Fe₂O₃) is higher than 70% by weight based on the total weight of the pozzolan.

The geopolymer is preferably activated with at least two alkaline activators to improve the physical properties of the geopolymer. The alkaline activators can be selected from hydroxides, silicates, sulphates, or carbonates of an alkali metal, which may be selected from Li, Na, or K, or an earth alkali metal, which may be selected from Mg, Ca, or Ba, or mixture of them. Preferably, the alkaline activators are sodium silicate (Na₂SiO₃) and sodium hydroxide (NaOH). Preferably, the alkaline activators are employed as individual solutions or as a mixture solution containing the two or more alkaline activators. Preferably, the concentration of the alkaline activators in the mixed solution is 5 M (mol/L) to 30 M with respect to the total sum of all alkaline activators. Even more preferably the alkaline activators' concentration of the mixed solution is in the range of from 10 M to 15 M. However, a person skilled in the art will recognize that a mixture of more than two alkaline activators or any alkaline activator other than those which contain silicate and hydroxide groups is also feasible. Preferably, the weight ratio of the solid geopolymer to the total of liquid solution(s) of the alkaline activators is about 2.5:1 (solid to liquid ratio). Likewise, the weight ratio of the silicate activator (NaSi₂O₃) solution to hydroxide activator (NaOH) solution, both having the concentration as mentioned above, is preferably 2.5:1 (liquid to liquid ratio). Also, the molar ratio of NaSi₂O₃ to NaOH is preferably in the range of from 2:1 to 3:2, more preferably 2.5. The solid to liquid weight ratio and the liquid to liquid weight ratio determine the configuration of the final product.

According to the preferred embodiment of the invention, the anti-radiation concrete comprises both fine and coarse aggregates. Aggregates serve as a reinforcement to add strength to the overall composite concrete. They bind with the geopolymer along with water to form a concrete with predictable and uniform properties. For a good concrete mix, aggregates are preferred to be clean, hard, strong particles free of absorbed chemicals or coatings of clay and other fine materials that could cause deterioration of concrete. Fine aggregate includes, but is not limited to, sand, waste iron, iron slag, or a mixture thereof. Preferably, sand is mainly used as the fine aggregate. However, waste iron which has been crushed, refined, and sieved to about 188 µm particle size may be mixed with sand to enhance the concrete density for better radiation shielding. Preferably, the weight ratio of sand to waste iron is in the range of 1:1 to 4:1, most preferred the weight ratio is 3:1. Other weight ratios of sand and waste iron such as 3:2 or 1:1 are also possible depending on the desired properties of the concrete.

In accordance to the preferred embodiment of the invention, coarse aggregate is preferably high density natural ore rocks. The ore rocks are crushed and sieved to obtain coarse aggregate of 4.5 mm to 9 mm particle size. Fine ore rocks that are able to pass through the sieve can be mixed with the fine aggregate. Preferably, the ore rocks are selected from, but not limited to, the group consisting of hematite, dolomite, cassiterite, and a combination thereof. A person skilled in the art will recognize that any other ore rocks that contain non-radioactive heavy weight metals can also be used.

One shall note that the particle size of the aggregates is subjected to variation depending on the desired concrete structure and density. Careful selection of different aggregate sizes enhances the close packing of the concrete structure and consequently improves densification.

As described by the preferred embodiment of the invention, the anti-radiation concrete comprises geopolymer, alkaline activators, fine aggregate, and coarse aggregate. Preferably, the anti-radiation concrete comprises fly ash, NaOH, NaSi₂O₃, sand, waste iron, and crushed ore rocks. Advantageously, the composition of the anti-radiation concrete is 10%-20% geopolymer, 4%-8% alkaline activators aqueous solution (10-15 mol/L), 15%-25% fine aggregate, and 50%-70% coarse aggregate (all percentages relate to weight-%).

A further embodiment of the invention is a method of producing an anti-radiation concrete as described in any of the preceding descriptions comprising the steps of mixing alkaline activators, geopolymer, fine aggregate, and coarse aggregate; curing the mixture in a mold at 70°C for 24 hours; aging the cured mixture; and de-molding the aged mixture.

Prior to mixing the required composition, a mixture of at least two alkaline activators is prepared at a predetermined ratio. The alkaline activators can be hydroxides, silicates, sulphates, or carbonates of an alkali metal. Preferably, a solution is prepared by separately preparing solutions of the individual alkaline activators (each solution having a preferred concentration of 10 to 15 mol/L) and then mixing the individual solutions to obtain a mixed solution having a total concentration of alkaline activators of 10 to 15 mol/L (5 to 7.5 mol/L with respect to each activator). Alternatively, the mixed solution is prepared by simultaneously or subsequently dissolving the corresponding salts in the solvent (preferably water) Preferably, the alkaline activators are sodium hydroxide and sodium silicate, whose solutions are mixed at a weight ratio of 2.5:1 (sodium silicate : sodium hydroxide).

Then the geopolymer is activated by the alkaline activators. The geopolymer can be kaolin, fly ash, pozzolonite, silica sand, or a mixture thereof. The alkaline activators solution mixture is gradually added to the geopolymer with agitation for a sufficient duration until a homogenours mixture is obtained. Preferably, the geopolymer is fly ash and the weight ratio of geopolymer to alkaline activators is 2.5:1.

In the further embodiment of the invention, the activated geopolymer is mixed homogeneously with fine and coarse aggregates with stirring. The fine and coarse aggregates are crushed and sieved to a desired particle size prior to mixing with the activated geopolymer. Fine aggregate may include sand, waste iron, iron slag, or a mixture thereof. Preferably, the fine aggregate is a mixture of sand and waste iron in a preferred weight ratio of 3:1. Other weight ratios of sand and waste iron such as 3:2 or 1:1 are also possible depending on the desired properties of the concrete.

Advantageously, the coarse aggregate is any heavy weight natural ore rock that is non-radioactive. Preferably, the ore rock can be hematite, dolomite, cassiterite, or a combination thereof.

According to the further embodiment of the invention, the activated geopolymer/aggregates mixture comprises 10%-20% geopolymer, 4%-8% alkaline activators aqueous solution, 15%-25% fine aggregate, and 50%-70% coarse aggregate (percentages relate to weight-% based on the total weight of the mixture). The homogenous activated geopolymer/aggregates mixture is then inserted into a mold covered by a thin plastics layer to prevent water evaporation, following by curing at a temperature of 60°C-80°C for at least 24 hours. Preferably, the curing temperature and curing time is 70°C and 24 hours, respectively, in a low temperature electrical furnace.

Subsequently, the mold is allowed cool to room temperature and aged for at least 7 days at room temperature. The mold is kept covered by the thin plastics layer during aging. The anti-radiation concrete is obtained after de-molding for at least 28 days.

### EXAMPLE

The composition of the anti-radiation concrete according to one of the preferred embodiment of the invention is shown in **Table 1.**

Here, raw aggregates and ores were crushed to form a powder consisting of fine particles. The geopolymer crystals were formed by adding alkaline activator solution to the mixture gradually. The fly ash/activator ratio (solid to liquid ratio) and the sodium silicate to sodium hydroxide ratio (liquid to liquid ratio) were both kept constant at 2.5 for all concrete samples. In order to attain a homogenous mixture of fly ash and alkaline activator with a constituent's ratio of 2.5, the elements were blended using a mechanical binder. Waste iron fillings were collected from different workshops of the school of material building and from the industrial area in Penang; they were refined and sieved to about 188 µm. Then, they were added to the sand of the concrete to enhance its density and to improve its shielding performance in turn. In the preparation of high density and heavy weight geopolymer concrete, large amount of hematite aggregates and fine mixture of ores was used.

More details about the mixture design are listed in Table 1. A detailed particle size analysis of sand aggregates and metal ore aggregates is presented in Table 2.

**Table 1: Composition of the concretes**

| Fly Ash (g) | Alkaline Activators (g) | | Ratio fly ash/activators | Ratio NaSi₂O₃/NaOH | Fine Aggregate (Sand + Waste Iron) (g) | Hematite Coarse Aggregate (g) |
|---|---|---|---|---|---|---|
| | NaOH | NaSi₂O₃ | | | | |
| 625.77 | 71.52 | 178.79 | 2.5 | 2.5 | 800 | 2400 |

**Table 2: Sieving analysis of the aggregates and sands**

| Sieve (mm) | Passing fraction (%) Sand | Passing fraction (%) Aggregates |
|---|---|---|
| 9.5 | -- | 100 |
| 6.5 | -- | 60 |
| 4.75 | 100 | 30 |
| 2.38 | 98.75 | 25 |
| 1.19 | 95 | 15 |
| 0.59 | 70 | 0 |
| 0.30 | 40 | -- |
| 0.15 | 10 | -- |

Three cubes of 100 x 100 x 100 mm³ for each sample have been prepared (total of 15 cubes).The compressive strength of the concrete produced with the composition as shown in Tables 1 and 2 is determined using a mechanical testing machine according to ASTM C 109/C 109 M standards. The compressive strength, density, porosity, water absorption, linear attenuation coefficient for both ¹³⁷Cs and ⁶⁰Co gamma ray sources of the produced concrete are shown in Table 3.

**Table 3: Characteristics of the concretes**

| Compressive strength (MPa) | Porosity (%) | Water Absorption (%) | Density (kg/m3) | Linear Attenuation Coefficient for two Gamma sources (cm⁻¹) | |
|---|---|---|---|---|---|
| | | | | ¹³⁷Cs | ⁶⁰Co |
| 87.112 | 8.73 | 3.39 | 4189 | 0.201±0.002 | 0.162±0.003 |

## Claims

1. An anti-radiation concrete comprising
a geopolymer;
a mixture of at least two alkaline activators;
fine aggregate; and
coarse aggregate from high density metal-containing rocks.

2. The concrete according to claim 1, wherein the geopolymer is selected from the group consisting of fly ash, kaolin, pozzolonite, silica sand, and a mixture thereof.

3. The concrete according to claim 1 or 2, wherein the alkaline activators are selected from the group consisting of hydroxides, silicates, sulphates, and carbonates of an alkali metal or earth alkali metal.

4. The concrete according to any of the preceding claims, wherein the fine aggregate is selected from the group consisting of sand, waste iron, slag, and a mixture thereof.

5. The concrete according to any of the preceding claims, wherein the coarse aggregate is selected from high density natural ore rocks, preferably selected from the group consisting of hematite, dolomite, cassiterite, and combinations thereof.

6. The concrete according to any of the preceding claims, wherein the weight ratio of the geopolymer to the alkaline activators is in the range of from 2:1 to 3:1.

7. The concrete according to any of the preceding claims, further comprising a curing agent selected from the group consisting of amines, polyamide resins, imidazoles, polymercaptan, and anhydrides curing agents.

8. A method of producing an anti-radiation concrete according to any one of the preceding claims comprising the steps of
mixing of at least two alkaline activators, a geopolymer, a fine aggregate, and a coarse aggregate;
curing the mixture in a mold at 70°C for 24 hours;
aging the cured mixture; and
de-molding the aged mixture.
